# EUROPÄISCHE PATENTSCHRIFT

(11) **EP 1 943 852 B1**
(45) Veröffentlichungstag und Bekanntmachung des Hinweises auf die Patenterteilung: **02.09.2009**
(21) Anmeldenummer: 06793448.9
(22) Anmeldetag: 12.09.2006
(51) Int. Cl.: H04W 4/06

(54) **VERFAHREN ZUR ÜBERTRAGUNG VON DATEN UNMITTELBAR NACH EINEM ERFOLGTEN SPRECHERWECHSEL AN ZUMINDEST EINEN ZUHÖRENDEN TEILNEHMER EINES BESTEHENDEN GRUPPENANRUFES**
METHOD FOR THE TRANSMISSION OF DATA TO AT LEAST ONE LISTENING USER OF AN ON-GOING GROUP CALL IMMEDIATELY AFTER SWITCHING SPEAKERS
PROCEDE POUR TRANSMETTRE DES DONNEES DIRECTEMENT APRES UN CHANGEMENT D'INTERLOCUTEUR, A AU MOINS UN ABONNE AUDITEUR D'UN APPEL GROUPE ETABLI

(30) Priorität: 24.10.2005 DE 102005050850
(43) Veröffentlichungstag der Anmeldung: 16.07.2008
(73) Patentinhaber: Nokia Siemens Networks GmbH & Co. KG, 81541 München (DE)
(72) Erfinder: MARX, Hans-Jürgen, 82319 Starnberg (DE); QIAN, Faqiang, A-1210 Wien (AT); SCHMITT, Peter, 36251 Ludwigsau (DE)
(86) Internationale Anmeldenummer: PCT/EP2006/066272
(87) Internationale Veröffentlichungsnummer: WO 2007/048658

(56) Entgegenhaltungen:
- WO-A-20/05055631
- 3RD GENERATION PARTNERSHIP PROJECT: "3GPP TS 43.068 v7.1.0; 3rd Generation Partnership Project; Technical Specification Group Core Network and Terminals; Voice Group Call Service (VGCS); Stage 2 (Release 7)" 3GPP, September 2005 (2005-09), XP002416094 in der Anmeldung erwähnt

## Beschreibung

Die Erfindung betrifft ein Verfahren zur Übertragung von Daten unmittelbar nach einem erfolgten Sprecherwechsel an zumindest einen zuhörenden Teilnehmer eines bestehenden Gruppenanrufes innerhalb eines Mobilfunksystems bestehend aus zumindest einer Hauptmobilvermittlungsstelle und zumindest einer Nebenmobilvermittlungsstelle, an die jeweils zumindest ein Basisstationssystems angeschlossen ist, wobei zum Wechsel der Sprecherfunktion von einem erster Teilnehmer auf einen zweiten Teilnehmer des bestehenden Gruppenanrufes dem zweiten Teilnehmer ein Uplink-Gruppenanrufkanal zugeteilt wird.

Aus der WO 2005/055631 ist ein Verfahren zur Übertragung von Kurznachrichten innerhalb eines bestehenden Gruppenrufs bekannt.

Bekannt sind aus Funkzellen bestehende digitale Mobilfunksysteme, beispielsweise auf dem GSM Standard (Global System for Mobil Communication) basierende Mobilfunksysteme, über welche insbesondere Gruppenanrufdienste ("Voice Group Call Services" (VGCS/ "Voice Broadcast Service" (VBS)) zur Verfügung gestellt werden können. Derartige Gruppenanrufdienste, bei denen jeweils ein Gruppenanruf an eine Gruppe von Funkteilnehmern (kurz: Teilnehmer) gerichtet wird, sind beispielsweise in den Standards 3GPP TS 43.068 und 43.069 definiert, wobei die Teilnehmer sprechende und/oder zuhörende Nutzer eines vorzugsweise mobilen Kommunikationsendgerätes sind.

Dabei befinden sich die Teilnehmer einer Gruppe in einem aus zumindest einer Funkzelle gebildeten Gruppenversorgungsbereich ("group call area"), in welchen sich die Teilnehmer der Gruppe gesteuert über zumindest eine Hauptmobilvermittlungsstelle ("anchor mobile services switching center") und ggf. weiterer Nebenmobilvermittlungsstellen ("relay mobile services switching center") während eines bestehenden Gruppenanrufs frei bewegen können.

Die Hauptmobilvermittlungsstelle ist jeweils mit den Nebenmobilvermittlungsstellen verbunden, an welche jeweils zumindest ein Basisstationssystem ("base station system") angeschlossen ist. Durch ein Basisstationssystem wird zumindest ein Versorgungsbereich in Form einer Funkzelle erzeugt. Die einzelnen sich teilweise überlappenden Funkzellen bilden in Ihrer Gesamtheit den gesamten Versorgungsbereich eines Mobilfunksystems aus. Hierbei ist die Hauptmobilvermittlungsstelle bzw. Anchor-Vermittlungsstelle für die Abwicklung und Aufrechterhaltung eines Gruppenanrufes vorgesehen und die Nebenmobilvermittlungsstelle bzw. Relay-Vermittlungsstelle für die Steuerung und Verwaltung derjenigen Funkzellen des Gruppenversorgungsbereiches zuständig, die nicht bereits der Hauptmobilvermittlungsstelle bzw. Anchor-Vermittlungsstelle zugeordnet sind.

Zur Kennzeichnung der potentiellen Teilnehmer eines Gruppenanrufes wird diesen innerhalb des Mobilfunksystems eine spezielle Gruppenadressinformation ("group ID") zugeordnet, die zur Aufnahme eines neuen Gruppenteilnehmers über eine Short Message Service (SMS)-Nachricht an diese übermittelt wird. Diese Vorgehensweise ist u.a. unter dem Begriff OTA = "over the air" Aktivierung bekannt. Hierzu ist beispielsweise im Mobilfunksystem eine OTA-Server-Einheit vorgesehen, die die Erzeugung und Aktualisierung von aktuellen Teilnehmerlisten des Gruppenanrufs sowie die Erzeugung von für einen Gruppenanruf erforderlichen Verbindungsparametern realisiert.

Zum Aufbau eines Gruppenanrufes gemäß der 3GPP Spezifikationen 43.068 und 43.069 ist es erforderlich, dass ein gemeinsamer Gruppenanrufkanal für sprechende und zuhörende Nutzer eines Kommunikationsendgerätes aufgebaut wird. Hierzu wird beispielsweise über einen so genannten "Dispatcher", d.h. einen Gruppenteilnehmer der auch ohne Zuteilung der Sprecherfunktion eine Sprechberechtigung innerhalb eines bestehenden Gruppenanrufes aufweist, ein Gruppenanruf initiiert.

Der Gruppenanrufkanal besteht aus einem Downlink-Gruppenanrufkanal und einem Uplink-Gruppenanrufkanal, wobei diese zu jeder Funkzelle des Gruppenversorgungsbereiches für die jeweilige Gruppe aufgebaut werden. Der Uplink-Gruppenanrufkanal ist hierbei ausschließlich für den sprechenden Teilnehmer eines Gruppenanrufes vorgesehen, wohingegen alle zuhörenden Teilnehmer eines Gruppenanrufes die über den Uplink-Gruppenanrufkanal an das Mobilfunksystem übertragenen Gruppenanrufdaten bzw. Gruppenapplikationsdaten über den gemeinsamen Downlink-Gruppenanrufkanal empfangen.

Nach dem beschriebenen Aufbau eines Gruppenanrufes ist zunächst dem Dispatcher als Sprecher der Uplink-Gruppenanrufkanal zugeteilt. Zum Wechsel der Sprecherfunktion innerhalb eines bestehen Gruppenanrufes wird durch den Dispatcher der Uplink-Gruppenanrufkanal freigegeben ("Uplink free message") und die weiteren Gruppenteilnehmer über die Freigabe des Uplink-Gruppenanrufkanals unterrichtet. Im Folgenden kann ein Gruppenteilnehmer die Sprecherfunktion für sich beanspruchen, indem er gemäß einem standardisierten "Uplink-Request-Verfahren" den Uplink-Gruppenanrufkanal anfordert. Nach einer durch einen die Sprecherfunktion übernehmenden Gruppenteilnehmer initiierten Anforderung wird diesem der Uplink-Gruppenanrufkanal und somit die Sprecherfunktion zugeteilt.

Bei typischen Gruppenanrufen sind die Sprechzeiten pro Sprecher statisch gesehen sehr kurz, so dass der Wechsel der Sprecherfunktion von einem ersten Teilnehmer bzw. einen ersten Nutzer eines ersten Kommunikationsendgerätes zu einen zweiten Teilnehmer bzw. zu einem zweiten Nutzer eines zweiten Kommunikationsendgerätes innerhalb einer bestehenden Gruppenanrufverbindung innerhalb kürzester Zeit erfolgen sollte. Insbesondere wenn der neue Sprecher dem früheren Sprecher eine Textnachricht senden möchte, sollte das innerhalb kürzester Zeit, vorzugsweise unter 500 ms, erfolgen.

Bekannte Signalisierungsprotokolle in bereits bestehenden Mobilfunksystemen weisen jedoch mehrere zeitintensive Signalisierungsschritte auf und bieten derzeitig keine Möglichkeit Textdaten zu versenden (siehe SMS-Service gemäß 3GPP TS 23.040). Insbesondere ist es nicht möglich, dass in den Sprecherwechsel involvierte Teilnehmer Textdaten untereinander austauschen.

Die Aufgabe der vorliegenden Erfindung besteht darin, ein effizientes und kosteneffektives Verfahren zur Übertragung von Daten unmittelbar nach einem erfolgten Sprecherwechsel an zumindest einen zuhörenden Teilnehmer eines bestehenden Gruppenanrufes anzugeben. Die Aufgabe wird ausgehend von dem Oberbegriff des Patentanspruches 1 durch dessen kennzeichnende Merkmale gelöst.

Der wesentliche Aspekt des erfindungsgemäßen Verfahrens ist darin zu sehen, dass nach Zuteilung des Uplink-Gruppenanrufkanals die Übertragung von Daten an zumindest einen zuhörenden Teilnehmer des Gruppenanrufes über eine durch den zweiten Teilnehmer erzeugte und über den Uplink-Gruppenanrufkanal zur Hauptmobilvermittlungsstelle übertragene Group-Call-Control-Nachricht initiiert wird. Besonders vorteilhaft wird durch eine gemäß dem Standard 3GPP TS 44.068 aufgebaute Group-Call-Control-Nachricht vom aktuellen Sprecher nach Übernahme der Sprecherrolle eine Übertragung von Daten an die weiteren Gruppenteilnehmern, vorzugsweise den zuletzt sprechenden Teilnehmer möglich, wodurch die für einen Nachrichtenaustausch erforderliche Zeitdauer deutlich reduziert werden kann. Insbesondere wird hierdurch eine Übertragung von Textdaten zwischen dem neuen Sprecher und den vorhergehenden Sprecher innerhalb des Gruppenanrufs möglich.

Vorteilhafte Weiterbildungen der Erfindung sind in den Unteransprüchen angegeben.

Die vorliegende Erfindung wird nachfolgend an einem Ausführungsbeispiel anhand von Figuren näher erläutert. Hierbei zeigen:
- Figur 1: beispielhaft in einem schematischen Blockschaltbild ein bestehender Gruppenanruf innerhalb eines Mobil- funksystems, und
- Figur 2: beispielhaft die einzelnen Signalisierungsschritte des erfindungsgemäßen Verfahrens zur

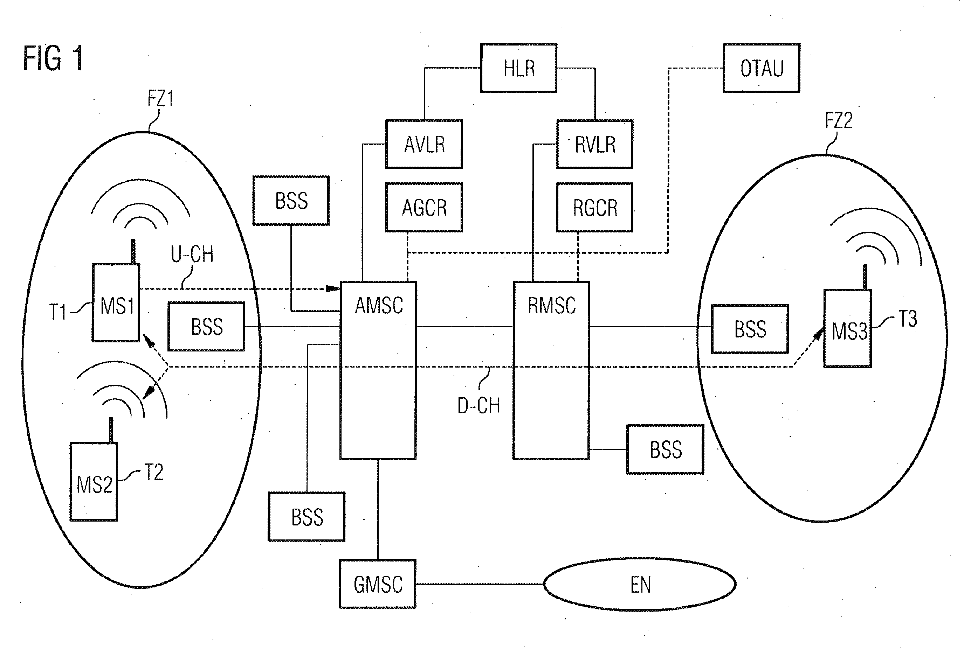

Das in Figur 1 in einem schematischen Blockschaltbild dargestellte vorzugsweise auf dem GSM Standard basierende Mobilfunksystem umfasst beispielsweise mehrere Basisstationssysteme BSS und Mobilvermittlungsstellen AMSC, RMSC, GMSC sowie mehrere Datenbasen AVLR, RVLR, AGCR, RGCR, HLR und eine OTA-Server-Einheit OTAU. Hierbei ist zumindest eine der Mobilvermittlungsstellen AMSC, RMSC, GMSC als Hauptvermittlungsstelle AMSC sowie zumindest eine weitere als Nebenvermittlungsstelle RMSC und zumindest eine als Zugangsmobilvermittlungsstelle GMSC ausgebildet.

An die Hauptvermittlungsstelle AMSC sowie die Nebenvermittlungsstelle RMSC ist jeweils zumindest ein Basisstationssystem BSS angeschlossen, welches jeweils so genannte Funkzellen FZ1, FZ2 erzeugt. Der gesamte Versorgungsbereich des Mobilfunksystems ist durch die Anzahl der Funkzellen FZ1, FZ2 festgelegt, in denen der Verbindungsaufbau über eine Luftschnittstelle beispielsweise vom Mobilfunksystem über die Basisstationssysteme BSS zu mobilen Kommunikationsendgeräten bzw. Mobilstationen MS1 - MS3 erfolgt. Für den Aufbau des Gruppenanrufes werden bevorzugte Funkzellen FZ1, FZ2 aus dem gesamten Versorgungsbereich des Mobilfunksystems ausgewählt, die gemeinsam betrachtet den Gruppenversorgungsbereich bilden.

Die unterschiedlichen Mobilvermittlungsstellen AMSC, RMSC sind zur Realisierung der mobilfunkspezifischen Vermittlungsfunktionen zur Verbindungssteuerung innerhalb des Mobilfunkssystems vorgesehen. Hierbei ist jeweils zumindest ein Basisstationssystem BSS einer Mobilvermittlungsstelle AMSC, RMSC zugeordnet, welche zur Durchführung von das jeweilige Basisstationssystem BSS betreffenden mobilfunkspezifischen Vermittlungsfunktionen vorgesehen ist.

Beispielsweise kann jede der Mobilvermittlungsstellen AMSC, RMSC eine Kommunikationsverbindung von dem Mobilfunksystem zu einem Festnetz, beispielsweise dem öffentlichen Fernsprechnetz PSTN oder zu einem weiteren Datennetz sowie zu einem Mobilfunksystem eines weiteren Netzwerkbetreibers aufbauen. Bei einer Kommunikationsverbindungen zwischen zwei Mobilstationen MS1, MS3 innerhalb des Mobilfunksystems kann der Verbindungsaufbau zwischen einer Mobilvermittlungsstelle, beispielsweise der Hauptmobilvermittlungsstelle AMSC und einer weiteren Mobilvermittlungsstelle, beispielsweise der Nebenmobilvermittlungsstellen RMSC oder innerhalb ein und derselben Mobilvermittlungsstelle AMSC, RMSC erfolgen. Die beispielsweise zumindest an die Hauptmobilvermittlungsstelle AMSC angeschlossene Zugangsmobilvermittlungsstelle GMSC bildet hierbei die Schnittstelle für die jeweils aus einem externen Telekommunikationssystem EN ankommenden Anrufe bzw. für die zu einem externen Telekommunikationssystem EN abgehenden Anrufe.

Jeder der Mobilvermittlungsstellen AMSC, RMSC ist zumindest eine Teilnehmerdatenbasis ("Visitor Location Register") AVLR, RVLR zugeordnet, welche die Teilnehmerdaten, die für die Verbindungsbehandlung derjenigen Teilnehmer T1 - T3, die sich aktuell in dem einer Mobilvermittlungsstelle AMSC, RMSC zugeordneten Versorgungsbereich aufhalten, bereitstellt. Darüber hinaus ist im Mobilfunksystem zumindest eine zentrale Teilnehmerdatenbasis ("Home Location Register") HLR vorgesehen, welche mit den einzelnen Teilnehmerdatenbasen AVLR, RVLR verbunden ist. In der zentralen Teilnehmerdatenbasis HLR werden die Teilnehmerdaten der im Mobilfunksystem registrierten Teilnehmer T1 - T3 permanent und zusätzlich Informationen über die Zugangsberechtigung eines Teilnehmers zum Mobilfunksystem zentral gespeichert. Zusätzlich enthält die zentrale Teilnehmerdatenbasis HLR Informationen über die für den Teilnehmer T1 - T3 aufgrund seines aktuellen Aufenthaltsorts innerhalb des Mobilfunksystems zuständige Teilnehmerdatenbasen AVLR, RVLR.

Zur Behandlung eines an eine Gruppe von Teilnehmern gerichteten Gruppenanrufes ist gemäß dem Standard TS 43.068 zusätzlich zu einer Teilnehmerdatenbasis AVLR, RVLR jeder der Mobilvermittlungsstellen AMSC, RMSC jeweils eine Gruppenanrufdatenbasis ("Group Call Register") AGCR, RGCR zugeordnet, welche die Gruppenanrufdaten zur Behandlung von Gruppenanrufen enthalten. Die in den zugeordneten Gruppenanrufdatenbasen AGCR, RGCR enthaltenen Datensätze sind gemäß dem Standard TS 43.068 organisiert.

Die Gruppenanrufdaten enthalten beispielsweise eine Liste derjenigen Funkzellen FZ1, FZ2, die den Gruppenversorgungsbereich bilden und somit zum Aufbau eines Gruppenanrufes innerhalb des Gruppenversorgungsbereiches zur Verfügung stehen. Dabei wird mittels einer Versorgungsbereichsinformation ("group call area ID") zur Kennzeichnung des Gruppenversorgungsbereiches auf die Liste der dem Gruppenversorgungsbereich angehörenden Funkzellen FZ1, FZ2 verwiesen und durch eine Gruppeninformation ("group ID") die einer Gruppe angehörenden Teilnehmern T1 - T3 gekennzeichnet. Darüber hinaus umfassen die Gruppenanrufdaten beispielsweise eine Liste von ausgewählten Teilnehmern ("Dispatcher") der zugeordneten Gruppe, die entweder zum Starten eines derartigen Gruppenanrufs oder zum Beenden des Gruppenanrufs berechtigt sind.

Im vorliegenden Ausführungsbeispiel ist bereits ein Gruppenanruf zwischen einem ersten Teilnehmer T1 bzw. Nutzer des ersten Kommunikationsendgerätes MS1, der beispielsweise als Dispatcher ausgebildet ist, und einem zweiten Teilnehmer T2 bzw. Nutzer des zweiten Kommunikationsendgerätes MS2 sowie einem dritten Teilnehmer T3 bzw. Nutzer eines dritten Kommunikationsendgerätes MS3 aufgebaut.

Hierbei befinden sich das erste und zweite mobile Kommunikationsendgerät MS1, MS2 in einer ersten Funkzelle FZ1 und das dritte mobile Kommunikationsendgerät MS3 in einer zweiten Funkzelle FZ2, wobei die erste Funkzelle FZ1 einem Basisstationssystem BSS zugeordnet ist, welches unmittelbar von der Hauptmobilvermittlungsstelle AMSC verwaltet wird und die zweite Funkzelle FZ2 einem weiteren Basisstationssystem BSS zugeordnet ist, welches durch die mit der Hauptmobilvermittlungsstelle AMSC verbundene Nebenmobilvermittlungsstelle NMSC verwaltet wird.

Zur Übertragung Gruppenapplikationsdaten Application_Data, d.h. Sprachdaten, Textdaten, weitere Nutz- und Steuerdaten etc. ist jeweils zu der ersten und zweiten Funkzelle FZ1, FZ2 ausgehend von der Hauptmobilvermittlungsstelle AMSC ein Downlink-Gruppenanrufkanal D-CH aufgebaut. Ferner besteht ein Uplink-Gruppenanrufkanal U-CH zwischen der ersten Funkzelle FZ1 und der Hauptmobilvermittlungsstelle AMSC, welcher dem aktuellen Sprecher, d.h. dem ersten Teilnehmer T1 bzw. dem Nutzer des ersten mobilen Kommunikationsendgerätes MS1 zugeteilt ist.

Durch den Netzwerkoperator wird eine Gruppe im Mobilfunksystem dadurch definiert, dass bestimmten Teilnehmern T1 - T3 in deren zugeordneten Gruppenanrufdatenbasis AGCR, RGCR zumindest eine spezifische Gruppeninformation ("group ID") zugeordnet wird. Die einzelnen der Gruppe angehörigen Teilnehmer werden hierbei mittels Ihrer Mobilfunknummer bzw. "Mobile Subscriber Integrated Services Digital Netzwerk Number (MSISDN)" definiert.

Die Aufnahme eines Teilnehmers zu einer Gruppe wird jedem Gruppenteilnehmer über eine erste Short Message Service (SMS)-Nachricht mitgeteilt, welche beispielsweise auf der SIM-Karte des mobilen Kommunikationsendgerätes MS1 bis MS3 gespeichert wird. Die Vorgehensweise ist u.a. unter dem Begriff OTA = "over the air" Aktivierung bekannt. Hierzu ist beispielsweise im Mobilfunksystem die OTA-Server-Einheit OTAU vorgesehen, die jeweils mit der zentralen Teilnehmerdatenbasis HLR, den einzelnen Teilnehmerdatenbasen AVLR, RVLR sowie den Gruppenanrufdatenbasen AGCR, RGCR in Verbindung steht.

Die OTA-Server-Einheit OTAU ermöglicht die Erzeugung und Aktualisierung der aktuellen Teilnehmerlisten des Gruppenanrufs sowie die Erzeugung von für einen Gruppenanruf erforderlichen Verbindungsparametern. Ferner wird mittels der OTA-Server-Einheit OTAU die zur Aufnahme der einzelnen Teilnehmer erforderlichen ersten SMS-Nachrichten erzeugt sowie die zugehörigen Teilnehmerdaten im zentralen Teilnehmerdatenbasis HLR und den einzelnen Teilnehmerdatenbasen AVLR, RVLR sowie die Gruppenanrufdaten den Gruppenanrufdatenbasen AGCR, RGCR aktualisiert. Die in der OTA-Server-Einheit OTAU erzeugten SMS-Nachrichten werden über ein SMS Service Center (nicht in der Figur dargestellt) gemäß dem Standard TS 23.040 an die mobilen Teilnehmer übertragen.

Soll nun die Sprecherrolle beispielsweise vom ersten Teilnehmer T1 auf den zweiten Teilnehmer T2 übergehen so wird zunächst durch den ersten Teilnehmer T1 der Uplink-Gruppenanrufkanal U-CH zwischen der ersten Funkzelle FZ1 und der Hauptmobilvermittlungsstelle AMSC freigegeben und dieser gemäß dem "Uplink-Request-Verfahren" durch den nachfolgenden Sprecher, d.h. dem zweiten Teilnehmer T2 angefordert. Anschließend erfolgt die Zuteilung des Uplink-Gruppenanrufkanal U-CH an den zweiten Teilnehmer T2.

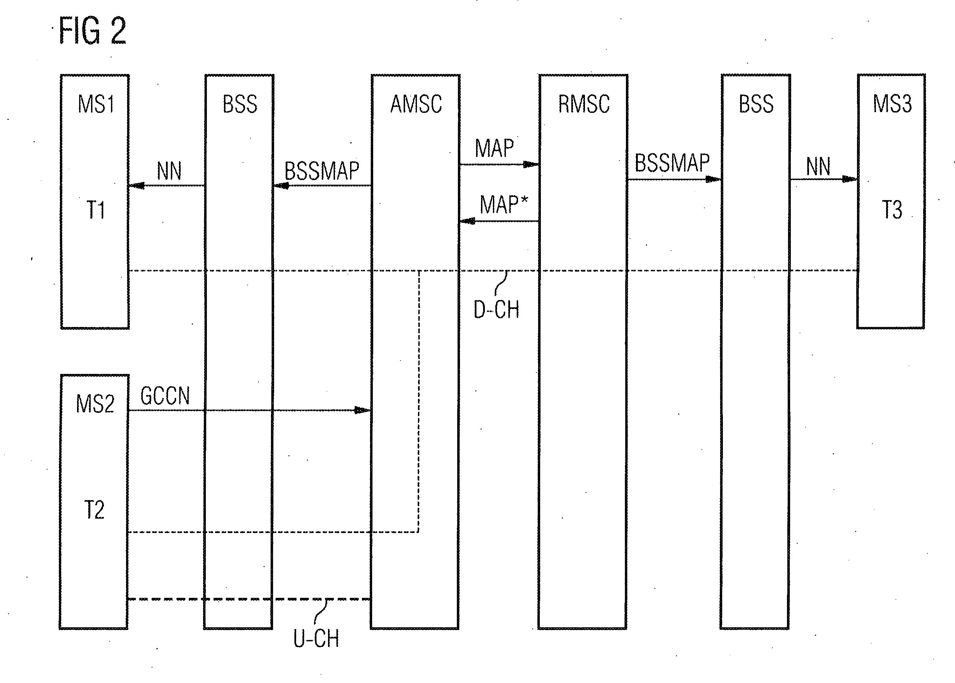

In Figur 2 sind in einem schematischen Blockschaltbild ausgewählte Elemente des Mobilfunkssystems und die zwischen diesem stattfindenden Signalisierungsschritte bzw. ausgetauschte Signalisierungsnachrichten dargestellt.

Erfindungsgemäß ist zumindest eine Group-Call-Control-Nachricht GCCN vorgesehen, welche über das A-Interface, d.h. der Schnittstelle zwischen den mobilen Kommunikationsendgeräten MS1, MS2 und der Hautvermittlungsstelle AMSC, von dem die Sprecherrolle übernehmenden zweiten Teilnehmer T2 bzw. den Nutzer des zweiten mobilen Kommunikationsendgerätes MS2 erzeugt wird. Diese wird anschließend vorzugsweise über eine oder mehrere Basisstationssysteme bzw. Basisstationssubsysteme BSS an die Hauptmobilvermittlungseinheit AMSC über den aktuell zugeteilten Uplink-Gruppenanrufkanal U-CH übertragen. Die Group-Call-Control-Nachricht GCCN ist gemäß dem im Standard 3GPP TS 44.068 angegebenen Format aufgebaut.

Die beschriebene Nachricht wird somit durch denjenigen Kommunikationsteilnehmer T1, T2, T3 initiiert, welcher über den bestehenden Gruppenanruf als neuer Sprecher Gruppenapplikationsdaten Application_Data senden will oder einem weiteren am Gruppenanrufdienst beteiligten Teilnehmer ("Driver"), den Empfang bzw. den Erhalt der vor dem Sprecherwechsel übermittelten Gruppenapplikationsdaten Application_Data bestätigen will.

Die Group-Call-Control-Nachricht GCCN kann beispielsweise wie folgt aufgebaut sein:

```
 Talker_Application_Data
 (
  - Protokoll Diskriminator,
  - Transaction ID,
  - Message Type,
  - Application Data (
                   - Data_ID,
                   - Talker Indication (Mobile Identity),
                   - Data
                      )
 )
```

Die Gruppenapplikationsdaten Application_Data werden innerhalb der Group-Call-Control-Nachricht GCCN in das standardgemäß (3GPP TS 44.068) vorgesehene Informationsdatenfeld eingefügt und können beispielsweise Sprachdaten, Textdaten oder weitere Nutz- und/oder Steuerdaten umfassen.

Innerhalb der Gruppenapplikationsdaten Application_Data werden zusätzlich zumindest eine vorzugsweise als Zähler ausgebildete Datenidentitätsinformation Data_ID zur Identifizierung der jeweils übertragenen Daten und eine den aktuellen Sprecher kennzeichnende Sprecheridentitätsinformation Talker_ID vorgesehen, wobei die Sprecheridentitätsinformation Talker_ID beispielsweise abhängig von einer dem jeweiligen Kommunikationsendgerät MS1 - MS3 zugeordneten Geräteidentitätsinformation Mobile_ID sein kann.

Die Gruppenapplikationsdaten Application_Data weisen in einer bevorzugten Ausführungsform eine maximale Länge von 20 Datenoktetts auf. Nach Empfang der Group-Call-Control-Nachricht GCCN in der mobilen Hauptmobilvermittlungseinheit AMSC werden durch diese die in der Group-Call-Control-Nachricht enthaltenen Gruppenapplikationsdaten Application_Data ausgelesen und weiterverarbeitet.

Zur Weiterverarbeitung der Gruppenapplikationsdaten Application_Data wird von der Hauptmobilvermittlungsstelle AMSC eine Indication-Nachricht BSSMAP, vorzugsweise eine Base-Station-System-Management-Application-Part (BSSMAP)-Nachricht erzeugt und über diese die in der Group-Call-Control-Nachricht GCCN enthaltenen Gruppenapplikationsdaten Application_Data an die jeweilige Basisstation BSS, vorzugsweise über einen Fast-Associated-Call-Control (FAC)-Signalisierungskanal übertragen, wobei die Indication-Nachricht BSSMAP beispielsweise folgenden Aufbau aufweist:

```
Talker Application Data Indication
 (
  - Message Type,
  - Talker Indication (Data ID, Mobile Identity),
  - Application Data (
                   - Data_ID,
                   - Talker Indication (Mobile Identity),
                   - Data)
                      )
 )
```

In der Indication-Nachricht BSSMAP sind neben dem Nachrichtentyp ("Message Typ") auch die aus den Gruppenapplikationsdaten Application_Data gewonnene Datenidentitätsinformation Data_ID , die Sprecheridentitätsinformation Talker_ID sowie die Geräteidentitätsinformation Mobile ID enthalten.

Auch die in der Indication-Nachricht BSSMAP enthaltenen Gruppenanrufdaten dürfen eine maximale Länge von 20 Datenoktetts nicht überschreiten.

Nach Empfang dieser Indication-Nachricht BSSMAP in der jeweiligen Basisstationseinheit BSS wird durch diese eine weitere Notification-Nachricht NN mit angepassten Gruppenapplikationsdaten Application_Data* erzeugt und über einen vorzugsweise einen als Fast-Associated-Call-Control (FAC) ausgebildeten Signalisierungskanal an alle dem jeweiligen Basisstationssystem BSS zugeordnete Kommunikationsteilnehmer T1, T2 bzw. deren mobile Kommunikationsendgeräte MS1, MS2 des Gruppenanrufes weitergeleitet.

Ferner werden die in der Group-Call-Control-Nachricht GCCN enthaltenen Gruppenapplikationsdaten Application_Data über eine Management-Application-Part (MAP)-Signalisierungsnachricht MAP von der Hauptmobilvermittlungsstelle AMSC an zumindest eine Nebenvermittlungsstelle RMSC übertragen, deren Empfang über zumindest eine weitere Management-Application-Part (MAP)-Signalisierungsnachricht MAP der Hauptmobilvermittlungsstelle AMSC bestätigt wird.

Hierzu werden bereits standardgemäß vorgesehene Management-Application-Part (MAP)-Signalisierungsnachrichten MAP verwendet, die jeweils durch aus den Gruppenapplikationsdaten Application_Data gewonnene Parameter ergänzt werden. Beispielhaft können die Signalisierungsnachrichten folgenden Aufbau aufweisen:

```
 Forward Group Call_Signalling
 (Talker_Application_Data/ Talker Application Data Ack)

 Process_Group Call_Signalling
 (Talker_Application_Data/ Talker_Application_Data_Ack)
```

Die Erfindung wurde voranstehend an einem Ausführungsbeispiels beschrieben. Es versteht sich, dass zahlreiche Änderungen sowie Abwandlungen möglich sind, ohne dass dadurch der der Erfindung zugrundeliegende Erfindungsgedanke verlassen wird.

## Patentansprüche

1. Verfahren zur Übertragung von Daten unmittelbar nach einem erfolgten Sprecherwechsel an zumindest einen zuhörenden Teilnehmer eines bestehenden Gruppenanrufes innerhalb eines Mobilfunksystems bestehend aus zumindest einer Hauptmobilvermittlungsstelle (AMSC) und zumindest einer Nebenmobilvermittlungsstelle (RMSC), an die jeweils zumindest ein Basisstationssystems (BSS) angeschlossen ist, wobei zum Wechsel der Sprecherfunktion von einem erster Teilnehmer (T1) auf einen zweiten Teilnehmer (T2) des bestehenden Gruppenanrufes dem zweiten Teilnehmer (T2) ein Uplink-Gruppenanrufkanal (U-CH) zugeteilt wird,
**dadurch gekennzeichnet,**
**dass** nach Zuteilung des Uplink-Gruppenanrufkanals (U-CH) die Übertragung von Daten an zumindest einen zuhörenden Teilnehmer (T1, T3), vorzugsweise den ersten Teilnehmer (T1) des Gruppenanrufes über eine durch den zweiten Teilnehmer (T2) erzeugte und über den Uplink-Gruppenanrufkanal (U-CH) zur Hauptmobilvermittlungsstelle (AMSC) übertragene Group-Call-Control-Nachricht (GCCN) initiiert wird.

2. Verfahren nach Anspruch 1,
**dadurch gekennzeichnet,**
**dass** als Daten in der Group-Call-Control-Nachricht (GCCN) Gruppenapplikationsdaten (Application_data), vorzugsweise Textdaten übertragen werden.

3. Verfahren nach Anspruch 2,
**dadurch gekennzeichnet,**
**dass** die Gruppenapplikationsdaten (Application_data) neben Sprach- und/oder Steuerdaten den zweiten Teilnehmer (T2) als neuen Sprecher kennzeichnende Daten umfassen.

4. Verfahren nach Anspruch 2 oder 3,
**dadurch gekennzeichnet,**
**dass** von der Hauptmobilvermittlungsstelle (AMSC) die in der Group-Call-Control-Nachricht (GCCN) enthaltenen Gruppenapplikationsdaten (Application_data) ausgelesen und weiterverarbeitet werden.

5. Verfahren nach Anspruch 4,
**dadurch gekennzeichnet,**
**dass** von der Hauptmobilvermittlungsstelle eine Indication-Nachricht (BSSMAP), vorzugsweise eine Base-Station-System-Management-Application-Part-Nachricht erzeugt wird und über diese die in der Group-Call-Control-Nachricht (GCCN) enthaltenen Gruppenapplikationsdaten (Application_data) an die jeweiligen Basisstationssysteme (BSS) übertragen werden.

6. Verfahren nach Anspruch 5,
**dadurch gekennzeichnet,**
**dass** die Indication-Nachricht (BSSMAP) über ein Signaling-Call-Control-Protocoll-Signalisierungsprotokoll an die jeweiligen Basisstationssysteme (BSS) übertragen wird.

7. Verfahren nach Anspruch 6,
**dadurch gekennzeichnet,**
**dass** nach Empfang der Indication-Nachricht (BSSMAP) in der jeweiligen Basisstation eine Notification-Nachricht (NN) erzeugt wird, welche vorzugsweise über einen Fast-Associated-Call-Control-Signalisierungskanal an die jeweils in der Funkzelle (FZ1, FZ2) des Basisstationssystems (BSS) befindlichen Teilnehmer (T2, T3) des Gruppenanrufes übertragen wird.

8. Verfahren nach einem der Ansprüche 1 bis 7,
**dadurch gekennzeichnet,**
**dass** die in der Group-Call-Control-Nachricht (GCCN) enthaltenen Gruppenapplikationsdaten (Application_data) über eine Management-Application-Part-Signalisierungsnachricht (MAP) von der Hauptmobilvermittlungsstelle (AMSC) an zumindest eine Nebenvermittlungsstelle (RMSC) übertragen werden.

9. Verfahren nach Anspruch 8,
**dadurch gekennzeichnet,**
**dass** der Empfang der Gruppenapplikationsdaten (Application_data) über zumindest eine weitere Management-Application-Part-Signalisierungsnachricht (MAP*) der Hauptmobilvermittlungsstelle (AMSC) bestätigt wird.

10. Verfahren nach einem der Ansprüche 1 bis 9,
**dadurch gekennzeichnet,**
**dass** die Group-Call-Control-Nachricht (GCCN) den im Standard 3GPP TS 44.068 vorgegebenen Aufbau aufweist.

11. Verfahren nach einem der Ansprüche 4 bis 10,
**dadurch gekennzeichnet,**
**dass** die in der Group-Call-Control-Nachricht (GCCN) im Informationsdatenfeld enthaltenen Gruppenapplikationsdaten (Application_data) maximal 20 Datenoktetts umfassen.

12. Verfahren nach einem der Ansprüche 4 bis 11,
**dadurch gekennzeichnet,**
**dass** die im Informationsdatenfeld der Group-Call-Control-Nachricht (GCCN) enthaltenen Gruppenapplikationsdaten (Applicatïon_data) zumindest eine Datenidentitätsinformation (Data_ID) und eine Sprecheridentitätsinformation (Talker_ID) enthalten.

13. Verfahren nach einem der Ansprüche 1 bis 12,
**dadurch gekennzeichnet,**
**dass** die Gruppenapplikationsdaten (Application_data) an zumindest einen individuell festlegbaren Teilnehmer (T3) des Gruppenanrufes übertragen werden.

## Claims

1. Method for transmitting data to at least one listening subscriber of an existing group call immediately after switching talkers within a mobile radio system consisting of at least one anchor mobile services switching center (AMSC) and at least relay mobile services switching center (RMSC) to which in each case at least one base station system (BSS) is connected, wherein, for changing the talker function from a first subscriber (T1) to a second subscriber (T2) of the existing group call, an uplink group call channel (U-CH) is allocated to the second subscriber (T2), **characterized in that** after allocation of the uplink group call channel (U-CH), the transmission of data to at least one listening subscriber (T1, T3), preferably the first subscriber (T1), of the group call, is initiated via a group call control message (GCCN) generated by the second subscriber (T2) and transmitted to the anchor mobile services switching center (AMSC) via the uplink group call channel (U-CH).

2. Method according to Claim 1, **characterized in that** group application data (Application_data), preferably text data, are transmitted as data in the group call control message (GCCN).

3. Method according to Claim 2, **characterized in that** the group application data (Application_data), apart from voice and/or control data, comprise data identifying the second subscriber (T2) as new talker.

4. Method according to Claim 2 or 3, **characterized in that** the group application data (Application_data) contained in the group call control message (GCCN) are read out by the anchor mobile services switching center (AMSC) and processed further.

5. Method according to Claim 4, **characterized in that** the anchor mobile services switching center generates an indication message (BSSMAP), preferably a base station system management application part message and via this, the group application data (Application_data) contained in the group call control message (GCCN) are transmitted to the respective base station systems (BSS).

6. Method according to Claim 5, **characterized in that** the indication message (BSSMAP) is transmitted to the respective base station systems (BSS) via a signaling call control protocol signaling protocol.

7. Method according to Claim 6, **characterized in that** after reception of the indication message (BSSMAP) in the respective base station, a notification message (NN) is generated which is preferably transmitted via a fast associated call control signaling channel to the subscribers (T2, T3), located in each case in the radio cell (FZ1, FZ2) of the base station system (BSS), of the group call.

8. Method according to one of Claims 1 to 7, **characterized in that** the group application data (Application-data) contained in the group call control message (GCCN) are transmitted via a management application part signaling message (MAP) from the anchor mobile services switching center (AMSC) to at least one Relay Mobile Services Switching Center (RMSC).

9. Method according to Claim 8, **characterized in that** the reception of the group application data (Application-data) is acknowledged via at least one further management application part signaling message (MAP^{*}) of the anchor mobile services switching center (AMSC).

10. Method according to one of Claims 1 to 9, **characterized in that** the group call control message (GCCN) has the structure predetermined in the 3GPP TS 44.068 standard.

11. Method according to one of Claims 4 to 10, **characterized in that** the group application data (Application-data) contained in the information data field in the group call control message (GCCN) comprise a maximum of 20 data octets.

12. Method according to one of Claims 4 to 11, **characterized in that** the group application data (Application-data) contained in the information data field of the group call control message (GCCN) contain at least one data identity information item (Data-ID) and one talker identity information item (Talker_ID).

13. Method according to one of Claims 1 to 12, **characterized in that** the group application data (Application-data) are transmitted to at least one subscriber (T3) of the group call who can be individually specified.

## Revendications

1. Procédé de transmission de données, directement après un changement de locuteur, à au moins un usager auditeur d'un appel de groupe établi, au sein d'un système radio mobile composé d'au moins un centre de commutation de service mobile principal. (AMSC) et d'au moins un centre de commutation de service mobile secondaire (RMSC) à chacun desquels est connecté au moins un système de stations de base (BSS), un canal montant d'appel de groupe de liaison montante (U-CH) étant, aux fins du passage de la fonction de locuteur d'un premier usager (T1) à un deuxième usager (T2) de l'appel de groupe établi, attribué au deuxième usager (T2), **caractérisé en ce que**, après l'attribution du canal d'appel de groupe de liaison montante (U-CH), la transmission de données à au moins un usager auditeur (T1, T3), de préférence au premier usager (T1) de l'appel de groupe, est initialisée par l'intermédiaire d'un message de contrôle d'appel de groupe (GCCN) généré par le deuxième usager (T2) et transmis au centre de commutation de service mobile principal (AMSC) via le canal d'appel de groupe de liaison montante (U-CH).

2. Procédé selon la revendication 1, **caractérisé en ce que** sont transmises, en tant que données dans le message de contrôle d'appel de groupe (GCCN), des données d'application de groupe (Application_Data), de préférence des données de type texte.

3. Procédé selon la revendication 2, **caractérisé en ce que** les données d'application de groupe (Application_Data) incluent, outre des données vocales et/ou de commande, des données qui identifient le deuxième usager (T2) en tant que nouveau locuteur.

4. Procédé selon la revendication 2 ou 3, **caractérisé en ce que** les données d'application de groupe (Application_Data) contenues dans le message de contrôle d'appel de groupe (GCCN) sont sélectionnées et traitées subséquemment par le centre de commutation de service mobile principal (AMSC).

5. Procédé selon la revendication 4, **caractérisé en ce qu'**un message d'indication (BSSMAP), de préférence un message Base-Station-System-Management-Application-Part, est généré par le centre de commutation mobile principal et, via ce message, les données d'application de groupe (Application_Data) contenues dans le message de contrôle d'appel de groupe (GCCN) sont transmises aux systèmes de stations de base respectifs (BSS).

6. Procédé selon la revendication 5, **caractérisé en ce que** le message d'indication (BSSMAP) est transmis aux systèmes de stations de base respectifs (BSS) via un protocole de signalisation Signaling-Call-Control-Protocol.

7. Procédé selon la revendication 6, **caractérisé en ce qu'**est généré dans la station de base respective, après la réception du message d'indication (BSSMAP), un message de notification (NN) qui est transmis, de préférence via un canal de signalisation Fast-Associated-Call-Control, aux usagers (T2, T3) de l'appel de groupe qui se trouvent respectivement dans la cellule radio (FZ1, FZ2) du système de stations de base (BSS).

8. Procédé selon l'une des revendications 1 à 7, **caractérisé en ce que** les données d'application de groupe (Application_Data) contenues dans le message de contrôle d'appel de groupe (GCCN) sont transmises à au moins un centre de commutation de service secondaire (RMSC) via un message de signalisation Management-Application-Part (MAP).

9. Procédé selon la revendication 8, **caractérisé en ce que** la réception des données d'application de groupe (Application_Data) est confirmée via au moins un autre message de signalisation Management-Application-Part (MAP*) du centre de commutation de service mobile principal (AMSC).

10. Procédé selon l'une des revendications 1 à 9, **caractérisé en ce que** le message de contrôle d'appel de groupe (GCCN) présente la structure spécifiée dans la norme 3GPP TS 44.068.

11. Procédé selon l'une des revendications 4 à 10, **caractérisé en ce que** les données d'application de groupe (Application_Data) contenues dans le champ de données d'informations du message de contrôle d'appel de groupe (GCCN) comprennent au maximum 20 octets de données.

12. Procédé selon l'une des revendications 4 à 10, **caractérisé en ce que** les données d'application de groupe (Application_Data) contenues dans le champ de données d'informations du message de contrôle d'appel de groupe (GCCN) contiennent au moins une information d'identité de données (Data_ID) et une information d'identité de locuteur (Talker_ID).

13. Procédé selon l'une des revendications 1 à 12, **caractérisé en ce que** les données d'application de groupe (Application_Data) sont transmises à au moins un usager (T3) de l'appel de groupe qui peut être déterminé individuellement.
